Europäisches Patentamt

European Patent Office

Office européen des brevets

(19)

(11) Numéro de publication : **0 028 578**
**B1**

(12) # FASCICULE DE BREVET EUROPÉEN

(45) Date de publication du fascicule du brevet :
11.04.84

(21) Numéro de dépôt : 80430020.0

(22) Date de dépôt : 02.10.80

(51) Int. Cl.³ : **A 46 B 15/00**

(54) **Brosse à dents sonore.**

(30) Priorité : 31.10.79 FR 7927399

(43) Date de publication de la demande :
13.05.81 Bulletin 81/19

(45) Mention de la délivrance du brevet :
11.04.84 Bulletin 84/15

(84) Etats contractants désignés :
**BE CH DE GB IT LI NL SE**

(56) Documents cités :
**DE-A- 2 756 306**
**DE-C- 909 688**
**DE-U- 7 342 778**
**FR-A- 1 484 982**
**GB-A- 23 441**
**US-A- 2 877 477**
**US-A- 2 947 013**
**US-A- 3 859 684**
**US-A- 4 001 909**

(73) Titulaire : **Siahou, Joseph**
**14, Rue Pascal**
**F-13007 Marseille (FR)**

(72) Inventeur : **Siahou, Joseph**
**14, Rue Pascal**
**F-13007 Marseille (FR)**

(74) Mandataire : **Roman, Alphonse**
**35 Rue Paradis**
**F-13001 Marseille (FR)**

Brosse à dents sonore

L'objet de l'invention consiste en la réalisation fonctionnelle d'une brosse à dents sonore.

L'hygiène dentaire commence dès le plus jeune âge, or c'est très difficile de s'assurer qu'un enfant dès l'âge de quatre ans puisse se brosser les dents pendant un temps minimum.

Il lui faut pour cela des références, la durée minima d'un bon brossage est de 3 minutes.

Il est connu d'utiliser des dispositifs sonores dans les manches de brosses à dents pour obtenir une musicalité lors de leur utilisation. Parmi les systèmes utilisés on retrouve des déplacements actionnant un contact tel celui représenté DE-U-7 342 778 ou des transmissions plus ou moins complexes, mais on ne rencontre aucun dispositif utilisant la musicalité pour servir de contrôle à l'efficacité du brossage et en se basant à cet effet sur la combinaison des facteurs pression exercés sur les touffes avec le facteur durée prédéterminé de l'activité.

L'objet de cette invention consiste en la réalisation de deux dispositifs conjugués placés l'un dans l'autre, un dispositif sonore utilisant soit des œuvres musicales, soit des sons, soit des accords drôles de la brosse à dents.

Dans le carter qui fait poignée, le dispositif se met en marche au moment du brossage et s'arrête lorsque l'enfant ne se brosse pas, ceci permet un contrôle extérieur de la réalité du brossage. L'enfant doit savoir que tant que la musique persiste son brossage n'est pas terminé, sinon il est incomplet.

La mélodie ou la chanson enregistrées peuvent être changées pour éviter la routine de l'acte mécanique, donc à chaque jour peut correspondre une chanson différente.

L'enfant ou la personne adulte agrémentera donc l'acte de brossage par accompagnement qui pourra même évoquer le rythme de brossage. Pour ceux qui avaient une aversion du contact de la brosse à dents, le simple fait de détourner leur attention pourra les aider à surmonter cette situation.

Par rapport au Chirurgien-Dentiste traitant, l'enfant superposera dans son esprit la musique et oubliera le risque potentiel de douleur, cet exercice quotidien pourra résoudre bien des problèmes de structuration temporo-spatiale souvent à l'origine de difficultés d'apprentissage de la lecture et de l'écriture, difficulté ou impossibilité à associer le son au mouvement graphique, c'est donc une façon de conditionner l'enfant pour son hygiène dentaire. L'association mouvement de brossage et musique pourra l'amener à un auto contrôle. De plus la différence de couleur de la brosse, associée à une musique spécifique est un acte éducatif pour l'enfant, en ce sens qu'il l'amène à des opérations de classification indispensable à son développement intellectuel.

Si l'on détermine

couleur : perception

son : audition
temps : temporalité
mouvement : action

L'association de ces 4 paramètres favorise le développement intellectuel associé aux objectifs de l'hygiène régulière et harmonieuse désormais avec cette brosse à dents sonore.

L'action pourra être efficacement secondée par le rôle capital que peuvent jouer l'orthophoniste dans la rééducation ou l'éducation et la psychologie pour les troubles dû à l'aversion.

L'invention a pour objet la confection d'un carter où est incorporé un système sonore, la forme et la conception du carter permet de recevoir une brosse à dents.

Sur les dessins annexés donnés à titre d'exemples non limitatifs d'une des formes de réalisation de l'objet de l'invention :

La figure 1   montre la brosse à dents incorporée dans le carter et en attente d'utilisation ;

la figure 2   montre la brosse à dents en fonctionnement.

Le carter 1 muni de son système sonore 2 reçoit dans sa mâchoire 3 le manche de la brosse à dents 4 retenu à l'extrémité par une griffe 5 montée sur ressort 6 et une semelle de retenue 11, d'un guide 12 ce qui permet à la brosse d'être mobile dans le sens bas haut et de pouvoir par la pression sur les dents au moment de l'usage de venir appuyer sur le bouton de contact 8 qui met en action le système sonore 2 pouvant être électronique, la durée musicale ayant été déterminée en fonction du temps nécessaire pour le brossage des dents.

Le remontage de l'appareil sonore s'effectue par la vis 9 qui tend le ressort 10, on conçoit dès lors le fonctionnement de cet appareil.

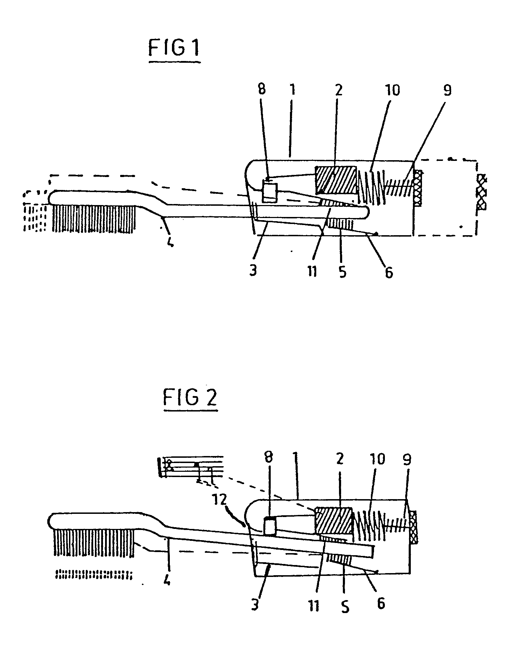

Sur la figure 2 on voit la brosse à dents en position de brossage, le manche 4 vient appuyer le bouton de contact 8 ce qui indique par le résultat sonore son application et permet donc de suivre si l'usager va utiliser le temps nécessaire à un brossage correct.

**Revendications**

1. Dispositif de brosse à dents, comportant un carter (1), dans lequel est logé un système sonore (2), dont la durée de fonctionnement définit la durée minimale de brossage des dents, caractérisé en ce que le manche de la brosse (4) est inséré à pivotement dans une mâchoire (3) du carter (1), ledit pivotement s'effectuant contre la tension opposée d'un ressort (6) sous l'effet de la pression exercée par les touffes de la brosse en contact avec les dents, le manche de la brosse agissant sur un contact faisant fonctionner le système sonore tant que la pression nécessaire pour le nettoyage efficace des dents est exercée.

2. Dispositif suivant la revendication 1 se caractérisant par le fait que le manche, immobilisé à son extrémité par une griffe (5), se déplace dans un guide (12) ne permettant que son déplacement vertical dans la projection du contact de sonorisation.

3. Dispositif suivant la revendication 1 caractérisé en ce que l'extrémité du manche comporte un guide (12) assurant un débattement orienté dudit manche, ce dernier actionnant le bouton de contact (8) agissant sur le système sonore (2) lequel comporte un remontoir minute (9) avec ressort (10).

## Claims

1. Tooth brush device, comprising a housing (1) in which is disposed a sound-producing system (2), the duration of operation of which defines the minimum duration of brushing of the teeth, characterised in that the handle of the brush (4) is inserted pivotably in a jaw (3) of the housing (1), the said pivoting taking place against the opposed force of a spring (6) under the effect of the pressure exerted by the tufts of the brush in contact with the teeth, the handle of the brush acting on a contact causing operation of the sound-producing system so long as the pressure necessary for effective cleaning of the teeth is exerted.

2. Device according to claim 1, characterised by the fact that the handle, immobilised at its end by a gripper (5), moves in a guide (12) permitting only its vertical displacement in line with the sound-producing contact.

3. Device according to claim 1, characterised in that the end of the handle comprises a guide (12) ensuring an orientated to-and-fro movement of the said handle, this latter actuating the contact button (8) acting on the sound-reproducing system (2) which comprises a re-setting control (9) with spring (10).

## Ansprüche

1. Zahnbürste, in deren Stiel-Gehäuse (1) ein System (2) zur Wiedergabe bzw. Produktion von Tönen untergebracht ist, dessen Funktionsdauer der minimalen Dauer des Zähneputzens entspricht, dadurch gekennzeichnet, dass der Stiel der Bürste (4) schwenkbar in einer Fassung (3) des Gehäuses (1) einsetzbar ist, wobei die Schwenkbewegung ausgeführt wird gegen den Druck einer Feder (6) unter der Wirkung des Druckes, der von den Borsten der Bürste bei der Berührung mit den Zähnen ausgeübt wird, wobei der Stiel der Bürste auf einen Kontakt einwirkt, der das Klangsystem zum Klingen bringt, solange der für eine wirksame Reinigung der Zähne erforderliche Druck ausgeübt wird.

2. Vorrichtung nach Anspruch 1, dadurch gekennzeichnet, dass der Stiel (4) in einer Führung (12) sitzt und an seinem hinteren Ende von einem Haken (5) festgehalten ist, derart, dass sich der Stiel nur gegen einen Betätigungsknopf (8) des Klangsystems (2) bewegen kann.

3. Vorrichtung gemäss Anspruch 1, dadurch gekennzeichnet, dass das hintere Ende des Stieles eine Führung (12) aufweist, die ein gezieltes Einsetzen des Stieles gewährleistet, wobei der Stiel den Kontaktknopf (8) betätigt, welcher wiederum das Klangsystem (2) betätigt, welches einen Aufzug (9) mit einer Feder (10) aufweist.

FIG 1

FIG 2